Europäisches Patentamt

European Patent Office

Office européen des brevets

(19)

(11) **EP 1 192 596 B1**

(12) **FASCICULE DE BREVET EUROPEEN**

(45) Date de publication et mention
de la délivrance du brevet:
**17.09.2003 Bulletin 2003/38**

(21) Numéro de dépôt: **00946034.6**

(22) Date de dépôt: **28.06.2000**

(51) Int Cl.$^7$: **G06N 5/04**

(86) Numéro de dépôt international:
**PCT/FR00/01804**

(87) Numéro de publication internationale:
**WO 01/003064 (11.01.2001 Gazette 2001/02)**

(54) **SYSTEME D'INTELLIGENCE ARTIFICIELLE POUR LA CLASSIFICATION D'EVENEMENTS, D'OBJETS OU DE SITUATIONS**

KÜNSTLICHES INTELLIGENZSYSTEM FÜR DIE KLASSIFIZERUNG VON EREIGNISSEN, OBJEKTEN ODER SITUATIONEN

ARTIFICIAL INTELLIGENCE SYSTEMS FOR CLASSIFYING EVENTS, OBJECTS AND SITUATIONS

(84) Etats contractants désignés:
**AT BE CH CY DE DK ES FI FR GB GR IE IT LI LU MC NL PT SE**

(30) Priorité: **01.07.1999 FR 9908472**

(43) Date de publication de la demande:
**03.04.2002 Bulletin 2002/14**

(73) Titulaire: **COMMISSARIAT A L'ENERGIE ATOMIQUE**
**75752 Paris Cédex 15 (FR)**

(72) Inventeurs:
• **MULLER, Jean-Denis**
**F-78120 Clairefontaine-en-Yvelynes (FR)**
• **MULLER CARCELES, Stéphanie**
**F-78120 Clairefontaine-en-Yvelynes (FR)**

(74) Mandataire: **Poulin, Gérard et al**
**Société BREVATOME**
**3, rue du Docteur Lancereaux**
**75008 Paris (FR)**

(56) Documents cités:
**EP-A- 0 468 229**

• **CHU CH -K P ET AL: "FIRST BREAK REFRACTION EVENT PICKING USING FUZZY LOGIC SYSTEMS" IEEE TRANSACTIONS ON FUZZY SYSTEMS,US,IEEE INC. NEW YORK, vol. 2, no. 4, 1 novembre 1994 (1994-11-01), pages 255-266, XP000469682 ISSN: 1063-6706**
• **MAGOTRA N ET AL: "SEISMIC SIGNAL DISCRIMINATION USING ADAPTIVE SYSTEM PARAMETERS" , PROCEEDINGS OF THE MIDWEST SYMPOSIUM ON CIRCUITS AND SYSTEMS,US,NEW YORK, IEEE, VOL. CONF. 33, PAGE(S) 84-87 XP000280121 le document en entier**
• **MULLER J D et al.: 'RAMSES, un système multi experts pour la surveillance sismique opérationelle' Actes de ISAI'99, juin 1999 (1999-06), voir http://www.afia.polytechnique.fr/plate-forme/Ac - tes/isai2.doc et www.afia.polytechnique.fr/plate-forme/Actes/is a- i2.bib**

**Description**

DOMAINE TECHNIQUE

La présente invention concerne un système d'intelligence artificielle pour la classification d'événements, d'objets ou de situations à partir de signaux et de paramètres discriminants issus de modèles.

L'invention s'applique notamment à la classification d'événements sismiques. Une telle classification sera considérée à titre d'exemple non limitatif dans la suite de la description.

ETAT DE LA TECHNIQUE ANTERIEURE

La classification automatique d'événements sismiques

La classification automatique d'événements sismiques est un problème relativement récent, puisque le problème n'a véritablement été abordé que dans les années 1980. Ces travaux sont majoritairement orientés vers la recherche de paramètres discriminants (c'est-à-dire susceptibles de permettre la classification) dans les signaux sismiques. De nombreuses caractéristiques potentielles sont proposées en vue d'une future classification automatique. A partir de 1990, on commence à trouver dans les articles publiés des tentatives de classification automatique, que ce soit par des techniques neuronales ou par des systèmes à base de règles. Ces travaux cherchent à séparer les séismes d'origine naturelle des explosions. Aucun de ces articles ne traite de la discrimination d'effondrements miniers (" coups de terrain ").

Du fait de la complexité du problème, ces articles mettent clairement en évidence la nécessité de mettre au point des systèmes automatiques capables d'apprentissage. Les méthodes neuronales ont donc souvent été proposées pour réaliser la discrimination automatique d'événements sismiques, mais avec des limitations qui sont analysées plus loin. Les modèles les plus couramment proposés sont les perceptrons multi-couches à connexions complètes entre couches successives.

Tous ces articles cherchent à déterminer l'origine du séisme à partir de caractéristiques extraites uniquement des signaux. Les données de plus haut niveau (date, heure, latitude, longitude, magnitude...) ne sont jamais employées pour la classification. Or, les sismologues connaissent la difficulté de discriminer les signaux sismiques uniquement par des traitements de bas niveau.

Les travaux de Baumgardt et de ses collaborateurs décrits dans le document référencé [1] sont sans doute ceux qui ont permis les plus grandes avancées dans la recherche de paramètres discriminants.

Les variations du cepstre, le cepstre d'un signal x étant la transformée de Fourier inverse du logarithme de la transformée de Fourier de x, sont souvent utilisées. On peut ainsi montrer que le cepstre permet de visualiser le phénomène de micro-retards présents dans les signaux de tirs caractérisés par une plus large variance. Le document référencé [2] note aussi cette propriété en signalant néanmoins que l'absence de cette caractéristique ne permet aucune déduction quant à la classe de l'événement.

Les rapports des amplitudes des différents types d'ondes peuvent aussi servir de discriminants. Le document référencé [3] étudie toute une série de rapports d'amplitudes ($P_n$/Lg, Pg/Lg, Lg/Rg) . Ces rapports sont annoncés comme pouvant permettre une bonne discrimination.

Les mêmes auteurs introduisent aussi les rapports des densités spectrales de puissance des différents types d'ondes détectés. Comme pour les rapports d'amplitudes, ces discriminants sont utilisés par toutes les études qui recherchent des discriminants dans les signaux sismiques. Pour caractériser les explosions, on a également utilisé les rapports des densités spectrales de puissance d'un type d'onde, ici S, sur des bandes de fréquences différentes, c'est-à-dire le rapport de la densité spectrale de puissance de S dans la gamme 1-2 Hz à la densité spectrale de puissance de cette même phase dans la bande 7-20 Hz. Le rapport entre des densités spectrales de puissance de l'onde S avant et après 10 Hz est également présenté comme un bon séparateur des explosions des séismes.

Le document référencé [4] remarque que le temps de propagation des signaux provenant d'une mine a un temps $t_{Sg}$-$t_{Pg}$ constant pour une station d'enregistrement donnée. Ce temps de propagation est présenté comme une caractéristique potentielle pour une mine, restant cependant moins fiable que les précédentes caractéristiques.

Le document référencé [5] propose d'utiliser la présence de l'onde de surface des séismes pour les discriminer des explosions nucléaires à des distances régionales. La caractérisation de la présence d'une onde de surface est effectuée indirectement en comparant les magnitudes $m_b$ et $M_s$. Pour deux événements sismiques de même magnitude $m_b$, la magnitude de l'onde de surface $M_s$ est en général plus élevée dans le cas d'un séisme à cause de la présence de l'onde de surface que dans le cas d'une explosion. En effet, cette onde de Rayleigh de croûte intervient dans le calcul de la magnitude $M_s$ et sa présence est subordonnée au phénomène de cisaillement absent dans le cas d'explosions nucléaires. La représentation de la différence ($m_b$- $M_s$) en fonction de $m_b$ permet de vérifier cette hypothèse. Néanmoins, le calcul de la magnitude $M_s$ dépend de la périodicité du signal enregistré et n'est pas possible en toute rigueur pour des événements régionaux. Au contraire, la présence d'une onde de surface, correspondant à une onde de Rayleigh sédimentaire dans des signaux sismiques proches, caractérise des événements de nature artificielle. Une méthode de détection de ce second type d'onde de surface consiste à rechercher directement sa présence dans le spectrogramme du signal, sa fréquence étant connue (entre 0,5 et 1,5 Hz) et son heure d'arrivée supposée pouvant être calculée à partir de sa vitesse moyenne de propagation et de la distance séparant l'épicentre de la station d'enregistrement.

Les systèmes décrits dans les documents de l'art connu ne sont pas opérationnellement crédibles pour plusieurs raisons :

- Les études menées par des géophysiciens, le plus souvent riches et détaillées en matière de proposition de paramètres discriminants, ne proposent pas de méthode fiable pour l'exploitation automatique de ces paramètres.
- Les études , menées par des informaticiens proposent des systèmes qui ne tirent pas assez parti de la complémentarité des données et des connaissances géophysiques.

La plupart des études de l'art connu utilisent des bases de données d'événements sismiques de taille extrêmement réduite, ce qui a pour conséquence de ne pas permettre un apprentissage statistique correct. La classification se fait, le plus souvent, sur des bases ayant moins d'une centaine d'événements, comme décrit dans les documents référencés [2] et [6]. L'une des bases les plus importantes trouvée dans les documents de l'art connu est composée de 312 événements seulement, comme décrit dans le document [4]. La conséquence directe en est que les marges d'erreurs sur les résultats présentés sont très élevées, ce qui ne permet pas d'accorder beaucoup de confiance à ces résultats.

La répartition géographique des exemples de la base de données est un élément très important. La plupart des bases regroupent des événements qui ont eu lieu dans des régions de taille restreinte (quelques dizaines de kilomètres de côté), où les propriétés géologiques des sous-sols sont peu diversifiées. La recherche de discriminants généraux est donc biaisée, les discriminants n'étant efficaces que pour une région donnée.

De plus, comme décrit dans le document référencé [1], les événements des deux classes à discriminer peuvent provenir de deux régions géographiques clairement distinctes, parfois éloignées l'une de l'autre de plusieurs centaines de kilomètres. Il est alors impossible de savoir dans quelle mesure ce n'est pas la " coloration " des signaux par les couches géologiques traversées qui permet la discrimination, plus que les signaux eux-mêmes. Or les sismologues savent que cette coloration est loin d'être négligeable et que l'information de localisation est très importante.

Le plus souvent, un nombre très limité de stations d'enregistrement est utilisé. Les signaux sont enregistrés par deux ou trois stations au maximum, mais le plus souvent on se contente d'une unique station. L'événement sismique est alors représenté par un seul signal, ce qui réduit considérablement l'information utilisable.

Enfin, les événements intégrés dans la base de données sont très généralement sélectionnés selon un critère préalablement défini : magnitude supérieure à un seuil, rapport signal/bruit supérieur à un seuil, comme décrit dans le document référencé [2]. Mais cette sélection biaise évidemment totalement les résultats.

Si les études de l'art connu ont permis de recenser une large gamme de discriminants potentiellement utiles à la classification, il s'est avéré très difficile de trouver des discriminants globaux efficaces en raison du nombre élevé de types de tirs et de séismes distincts.

La plupart du temps, les classifieurs proposés se révèlent inefficaces parce que trop simples (séparateurs linéaires) ou impossibles à régler du fait de leur complexité. Ils imposent un énorme travail de prétraitement sur les données, ce qui rend les systèmes proposés non généralisables.

Exemple de surveillance sismique

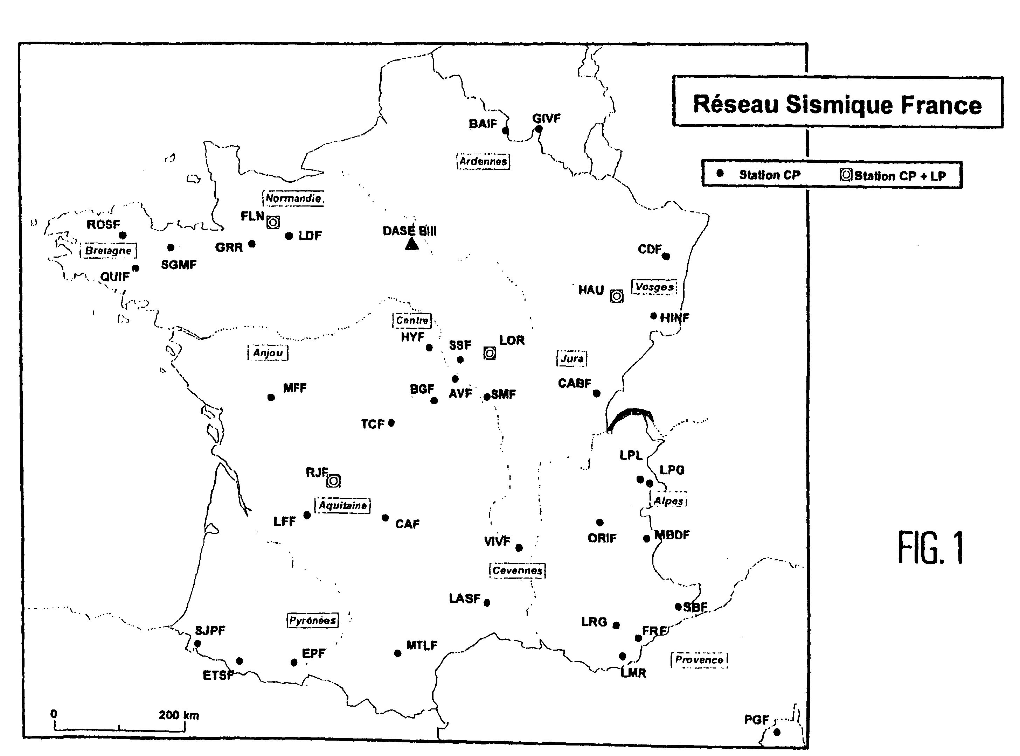

Le laboratoire de détection et de géophysique (LDG) du CEA surveille en continu l'activité sismique de la terre depuis 1962. Lorsqu'un événement sismique survient en un endroit du globe, il est enregistré en France par un réseau de quarante-deux sismomètres verticaux localisés sur le territoire métropolitain, comme illustré sur la figure 1, les stations CP étant des stations courtes périodes, et les stations LP des stations longues périodes. Une description détaillée du réseau de sismomètres et de la propagation des ondes sismiques en France est donnée dans le document référencé [7].

Ce réseau, qui utilisait depuis sa création la transmission par voies hertziennes, est passé récemment à une transmission numérique par satellite. Un filtrage et un gain adaptés du signal permettent de détecter les séismes proches ou au contraire les séismes lointains de plus longue période appelés téléséismes. Le réglage des paramètres de filtrage et du gain doit permettre de trouver un compromis entre la détection des événements sismiques de magnitude relativement faible et le bruit de fond.

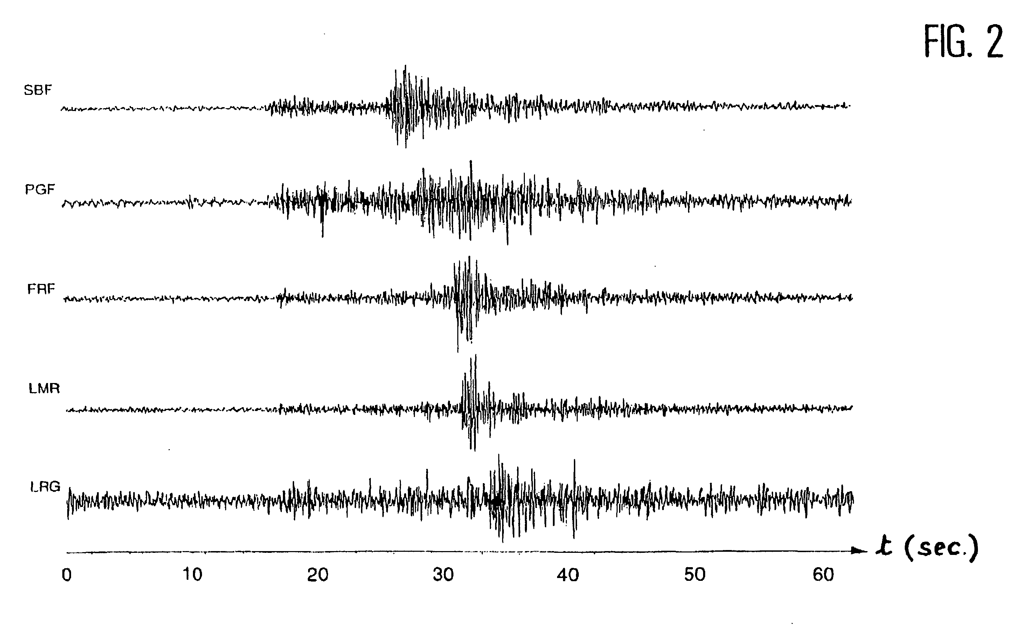

La figure 2 montre des signaux enregistrés par les sismomètres du laboratoire LDG situés entre 84 et 146 kilomètres (soit SBF : 84 km ; PGF : 110 km ; FRF : 127 km ; LMR : 136 km et LRG : 148 km) de l'épicentre estimé d'un séisme de magnitude 1,9 localisé à 10 kilomètres au sud d'Imperia en Italie, le 9 mai 1996 (heure : 1 heure 0 minute 59 secondes ; latitude : 43.34 ; longitude : 8.19 ; magnitude : 1,9).

Sur chaque signal sont répertoriées différentes phases sismiques qui serviront lors de l'analyse détaillée de l'événement.

Chaque année, environ 9000 événements sismiques proches sont ainsi détectés, dont 800 à 1 200 séismes naturels.

Les sismologues du laboratoire LDG dépouillent et analysent quotidiennement les données enregistrées par les stations du réseau français. Ils publient un bulletin hebdomadaire contenant l'ensemble des séismes naturels survenus en France ou dans les régions limitrophes. Un bulletin similaire est publié pour les téléséismes. Le tableau I, donné en fin de description, est un extrait du bulletin relatif à la période du 9 au 15 septembre 1998. Dans ce tableau on a les abréviations suivantes :

HEURE OR : heure d'origine (TU) ;
LAT : latitude de l'épicentre (deg) ;
LON : longitude de l'épicentre (deg) ;
PRO : profondeur de l'épicentre (km) ;
ML : magnitude locale ;
RMS : résidu quadratique moyen (s).

Ce tableau comporte donc l'ensemble des séismes proches détectés durant cette semaine et les caractéristiques de chaque événement : date et heure origine, position et profondeur de l'épicentre, magnitude, résidu quadratique moyen de localisation et région de localisation déduite.

En raison du fort déséquilibre entre le nombre d'événements artificiels et celui d'événements naturels (en France, les événements sismiques d'origine artificielle sont dix fois plus fréquents que les événements sismiques naturels), seuls les événements supposés être des séismes ou les événements de classe indéterminée sont extraits du bruit de fond par les sismologues pour être ensuite analysés plus précisément par un logiciel de localisation. Les autres signaux (événements artificiels pour la plupart) sont archivés pendant six mois.

La procédure d'exploitation des signaux consiste en une localisation déjà automatisée, suivie d'une phase de caractérisation (détermination de l'événement à l'origine des signaux).

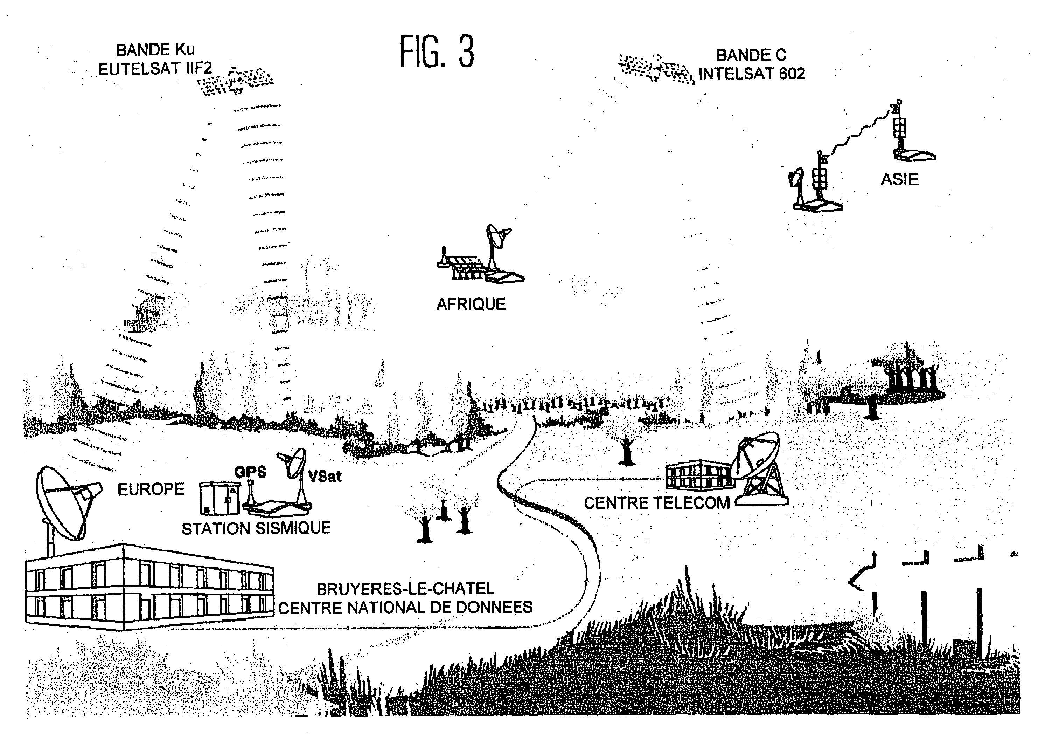

L'exploitation des signaux est effectuée à l'aide du système global illustré sur la figure 3.

Le document référencé [11] décrit un procédé de pointage d'arrivée première, qui est un procédé de reconnaissance de forme, en traitement de données sismiques. Ce procédé utilise ici des systèmes de logique floue. Il prend en compte des attributs sismiques comme caractéristiques.

Le document référencé [12] décrit un procédé de mise en oeuvre d'un système expert basé sur un réseau neuronal à action directe, à état continu entraîné. Ce réseau comprend une couche d'éléments de traitement d'entrée représentatifs des variables d'entrée, une couche d'éléments de traitement de sortie représentatifs des variables de sortie, et une ou plusieurs couches, d'éléments de traitement cachés.

Le document référencé (13) décrit un système multi-experts pour la surveillance sismique opérationnelle, dont l'originalité réside dans :

a) Le choix de construire les prises de décision en fusionnant des informations de statuts différents : indices de bas niveau (discriminants extraits des signaux sismiques par apprentissage) et indices de plus haut niveau calculés par des modèles géophysiques (heure de l'événement, position de l'épicentre, magnitude...).

b) La capacité du système à fonctionner en présence de données imparfaites (incomplètes, imprécises...). A cet effet, un codage spécifique des données permettant l'exploitation efficace de données incomplètes et imprécises a été développé.

c) La possibilité pour l'utilisateur d'interpréter les décisions prises par le système au moyen d'un système-expert flou interactif générant automatiquement des règles de décision intelligibles.

L'invention a pour objectif de pallier les inconvénients des systèmes de l'art connu en proposant un nouveau système d'intelligence artificielle pour la classification d'événements, d'objets ou de situations à partir de signaux et de paramètres discriminants issus de modèles.

## EXPOSE DE L'INVENTION

La présente invention concerne un système d'intelligence artificielle pour la classification d'événements, d'objets ou de situations à partir de signaux et de paramètres discriminants issus de modèles, comportant au moins une branche de traitement comprenant un système expert flou (expert SEF) prenant une décision à partir de propriétés de haut niveau et de paramètres discriminants de plus bas niveau extraits des signaux par des procédures de type traitement de signal, et capable d'expliquer sa décision à l'utilisateur par l'intermédiaire de règles, caractérisé en ce que ces règles sont triées par ordre d'applicabilité, un tel tri étant rendu possible par la fourniture par le système expert flou d'un critère d'activation de chaque règle permettant d'estimer son adéquation avec le cas traité.

Dans ce système expert flou on effectue une descente de gradient sur les paramètres :

- $x = y/\sigma$
- $s = 1n(2\sigma^2)$
- $r = 1n(\rho)$
- $d$

avec :

- $y$ : position des ensembles flous des prémisses
- $\sigma$ : largeur des ensembles flous des prémisses
- $\rho$ : poids des règles
- $d$ : degré d'activation de chaque classe pour chaque règle

Avantageusement le système de l'invention est un système multi-experts constitué d'au moins deux branches de traitement indépendantes, se configurant automatiquement par apprentissage statistique sur des bases de données, ayant des propriétés particulières, et fusionnées par un système décisionnel de haut niveau. Avantageusement une branche comprend un classifieur neuro-flou (expert CNF) prenant ses décisions à partir de propriétés de haut niveau et de paramètres discriminants de plus bas niveau extraits des signaux par des procédures de type traitement de signal. Avantageusement une autre branche comprend un réseau neuronal à connexions locales et poids partagés (expert TDNN) constitués de bancs de filtres adaptatifs non linéaires, extrayant lui-même des informations discriminantes de représentation temps-fréquence des signaux correspondants à l'événement.

L'invention peut être utilisée dans différents domaines d'application et notamment en :

**• Surveillance d'événements géophysiques**

Le système s'applique alors à l'analyse de tout événement géophysique observable par des signaux recueillis par des stations :

- signaux sismiques ;
- infrasons ;
- ondes hydro-acoustiques.

Ces événements peuvent être des événements proches (dits régionaux) ou lointains (par exemple des téléséismes).

la fonction à assurer peut être :

- un filtrage pour éliminer les événements non pertinents pour des traitements en aval ;
- une détection d'événements particuliers ;
- une classification exhaustive en un ensemble de groupes d'événements de même nature.

**• Surveillance et contrôle industriels**

Le système s'applique également à l'analyse d'objets ou de processus industriels, pour peu que l'on dispose de signaux ou d'images recueillis par des capteurs. En voici quelques exemples :

- Contrôle de qualité d'objets ou de produits manufacturés : l'objectif est de contrôler la forme et/ou la position d'objets, détecter et caractériser des défauts. Les experts CNF et SEF utilisent des mesures réalisées par traitement d'images. L'expert TDNN utilise une ou plusieurs images de la pièce.
- Maintenance prédictive d'équipements : l'objectif est de prévoir une future défaillance de machines, d'ordinateurs, d'équipements électroniques, de capteurs afin de donner l'alerte et de pouvoir mettre en oeuvre une procédure de correction avant la panne. Les experts CNF et SEF utilisent des mesures de coefficients de haut niveau, des corrélations. L'expert TDNN utilise des signaux.
- Surveillance de processus complexe : l'objectif est de surveiller le bon fonctionnement d'une chaîne de production.

**EP 1 192 596 B1**

Les experts CNF et SEF utilisent des mesures de coefficients de haut niveau. L'expert TDNN utilise des mesures de coefficients de bas niveau.

Dans le domaine géophysique, les propriétés de haut niveau peuvent être la localisation, la magnitude, l'heure et la date. Le système de l'invention permet de réaliser la classification automatique d'événements sismiques en trois ensembles :

- séismes naturels ;
- explosions (tirs de mines et essais militaires) ;
- coups de terrain (effondrement de couches minières).

Le système s'intègre alors dans une chaîne de traitements automatiques pour opérer une fonction de filtrage des événements sismiques. Ses caractéristiques principales sont :

- une fiabilité maximale : le système est capable de prendre des décisions même avec des données dégradées ou imprécises, voire en l'absence de certaines informations ;
- l'accès à l'explication des décisions afin de lever un doute éventuel sur une décision.

BREVE DESCRIPTION DES DESSINS

La figure 1 illustre le réseau de sismomètres du laboratoire de détection et de géophysique (LDG) du CEA en 1998.
La figure 2 illustre des exemples de signaux sismiques enregistrés par le réseau de la figure 1.
La figure 3 illustre un système global d'exploitation de signaux géophysique de l'art connu.
La figure 4 illustre le schéma de principe du système multi-experts de discrimination d'événements sismiques de l'invention.
La figure 5 illustre le schéma général d'apprentissage du système de l'invention à partir d'exemples.
La figure 6 illustre un neurone artificiel.
La figure 7 illustre un réseau de neurones artificiels.
La figure 8 illustre un classifieur neuro-flou.
La figure 9 illustre un mécanisme d'activation de cellules de codage.
La figure 10 illustre des exemples d'activation des cellules de codage.
La figure 11 illustre un système expert flou pour la discrimination d'événements sismiques.
Les figures 12A à 12D illustrent des prétraitements successifs appliqués à un signal sismique.
La figure 13 est une architecture d'un réseau de neurones à connexions locales et poids partagés.
La figure 14 illustre la représentation des épicentres des événements sismiques de 1962 à 1996.

EXPOSE DETAILLE DE MODES DE REALISATION

Description générale du système

Le système de l'invention comporte au moins une branche de traitement contenant un système expert flou. Lorsqu'il comprend plusieurs branches de traitements indépendantes, on parle de système multi-experts.

**• Prise de décision multi-experts**

Le principe de la prise de décision multi-experts, qui est donc l'un des modes de réalisation de l'invention, est l'exploitation de la synergie entre plusieurs branches de traitement complémentaires. Cette complémentarité réside dans :

A. Les performances générales : une branche est plutôt généraliste (performances assez bonnes dans la plupart des cas), une autre est plutôt spécialiste (très bonnes performances sur certains cas difficiles, taux d'erreurs plus élevé sur les cas ne relevant pas de sa compétence).
B. Les performances selon le cas traité : une branche peut être plus apte qu'une autre à traiter tel cas particulier.
C. La nature des entrées (signaux ou données de haut niveau).
D. La nature des sorties (simple donnée de la classe, estimation de la certitude de la décision, explication formelle de la décision).

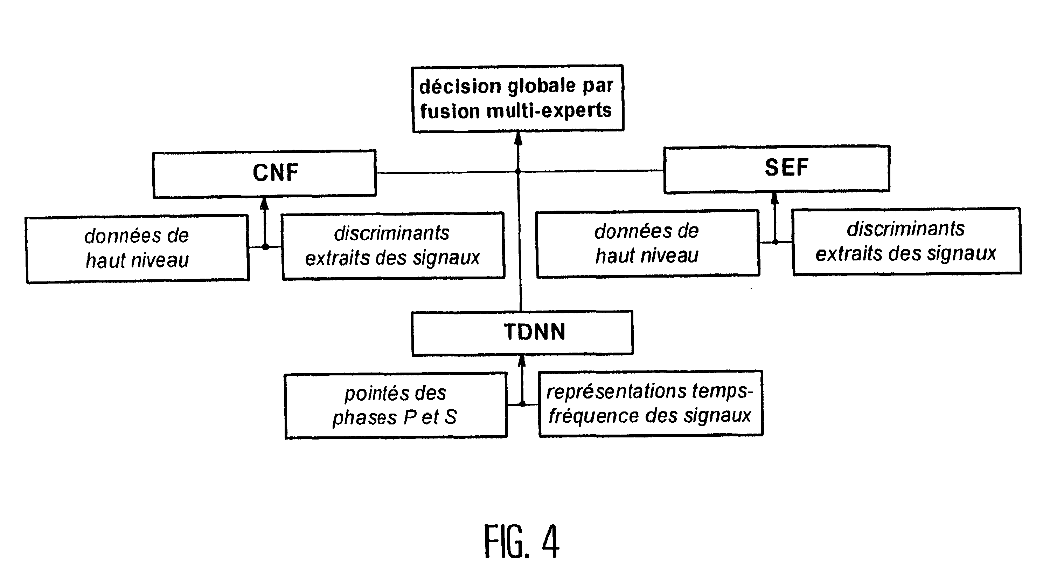

La figure 4 illustre le schéma de principe du système multi-experts de discrimination d'événements sismiques de l'invention. Ce système est constitué de plusieurs branches de traitement indépendantes, chacune ayant des propriétés particulières, fusionnées par un système décisionnel de haut niveau.

Ces branches sont :

- un classifieur neuro-flou, dit CNF, prenant ses décisions à partir de propriétés de haut niveau des événements (par exemple pour les événements sismiques : localisation, magnitude, heure, jour de la semaine) et des paramètres de plus bas niveau extraits des signaux par des procédures de type traitement du signal ;
- un système expert flou, dit SEF, prenant une décision de façon indépendante à partir des mêmes informations, et capable d'expliquer sa décision à l'utilisateur par l'intermédiaire de règles triées par ordre d'applicabilité à l'événement traité ;
- un réseau neuronal à connexions locales et poids partagés, dit TDNN, constitué de bancs de filtres adaptatifs non linéaires, extrayant lui-même des informations pertinentes de représentations temps-fréquence des signaux correspondant à l'événement.

Ces trois branches se configurent automatiquement par apprentissage statistique sur des bases de données d'événements sismiques.

**• *Apprentissage* à partir *d'exemples***

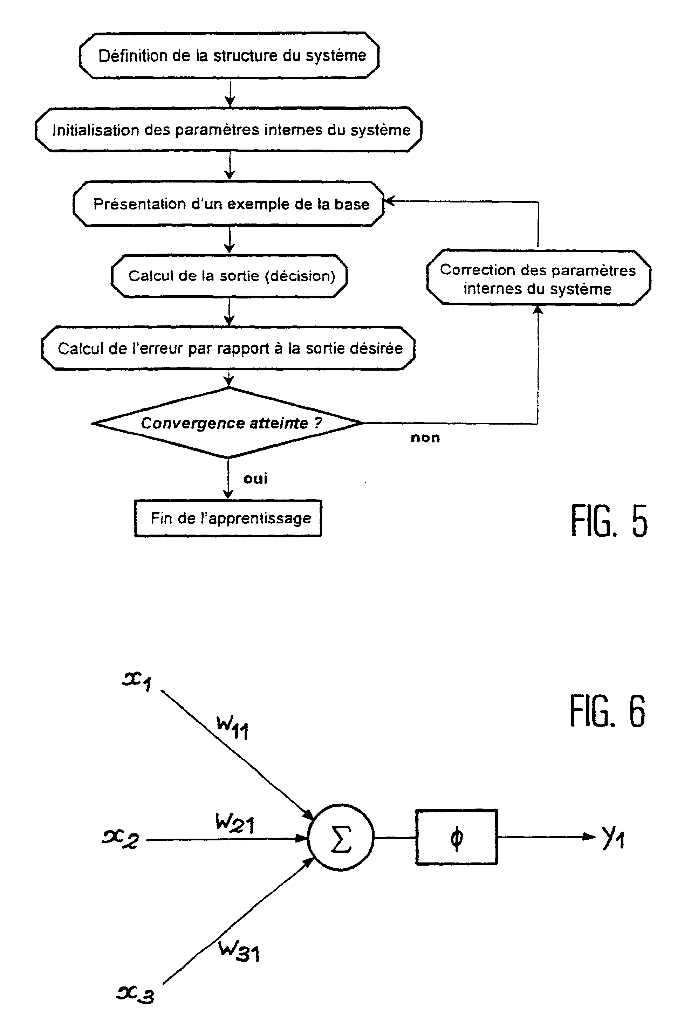

L'apprentissage à partir d'exemples consiste à construire un modèle du système de prise de décision par ajustement progressif de paramètres à partir de données. Ce modèle doit être capable d'associer la bonne décision (sortie) à un ensemble de données décrivant le cas traité (entrées). Cela se fait progressivement, par présentation itérative des cas disponibles dans la base d'exemples en entrée du système. Une telle procédure est illustré sur l'organigramme de la figure 5.

Dans l'invention, le modèle qui apprend peut être soit un réseau de neurones artificiels, soit un système expert flou.

Une fois que le système a terminé sa phase d'apprentissage, ses paramètres internes sont figés et le système est prêt à être utilisé.

**• *Réseau de neurones de type « Perception multicouche »***

Un tel réseau de neurones artificiels de type « Perceptron multicouche » est un modèle particulier de réseau de neurones pouvant être utilisé comme système de prise de décision. Il est constitué d'un réseau d'automates de calcul simples, les " neurones artificiels ".

Un neurone $N^j$, comme illustré sur la figure 6, est une entité constituée d'un vecteur-poids $W_j=\{w_{ij}\}$ et d'une fonction de transfert non linéaire $\phi$. Il admet en entrée un vecteur $\mathbf{X}\text{-}\{x_i\}$ et effectue une transformation de ces entrées de type

$$y_j = \phi\left(\sum_i w_{ij}\ x_i\right).$$

Par similitude avec le vocabulaire employé en neurophysiologie, on dit que chaque entrée $x_i$ est reliée au neurone $N^j$ par une connexion synaptique. Un poids synaptique $w_{ij}$ module l'efficacité de cette connexion.

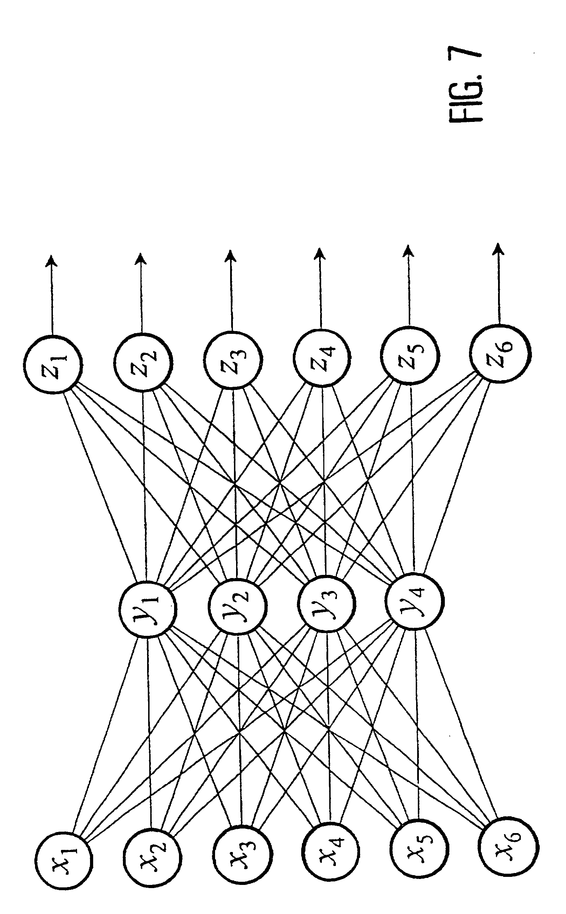

Dans un réseau de neurones artificiels, comme illustré sur la figure 7, les neurones sont assemblés en *couches* successives. Une couche est définie comme un ensemble de neurones n'ayant pas de connexions entre eux, mais pouvant avoir des connexions avec des neurones des couches précédentes (entrées) ou suivantes (sorties). En général, on ne connecte que des neurones de couches successives.

L'apprentissage consiste à modifier progressivement les valeurs des poids $w_{ij}$ jusqu'à ce que les sorties du réseau, qui est constitué d'un certain nombre de couches de neurones, correspondent aux sorties désirées.

Pour cela, on définit une erreur de classification que l'on cherche à minimiser. L'erreur la plus couramment utilisée est l'erreur auadraticue. définie par

$$E = \sum_{k=1}^{N_{SORTIES}} \left( z_k - z_k^{\,désirée} \right)^2 \quad .$$

La méthode consiste à faire une descente de gradient sur les poids par l'équation $\Delta wij = -\alpha \frac{\partial E}{\partial w_{ij}}$ avec $\alpha > 0$. Cette équation, lorsqu'on la développe, donne la formule de correction pour chaque poids du réseau.

• **_Système expert flou_**

Un système expert flou est un autre modèle de système de prise de décision. Il présente l'avantage sur le réseau de neurones de donner une forme d'explication de ses décisions. Il est constitué d'un ensemble d'unités de calcul, les " règles d'inférence floue ".

Une règle d'inférence floue est une entité de la forme " _si < prémisse > alors < conclusion > "_. La prémisse est la partie que l'on cherche à mettre en correspondance avec les données d'entrées.

En effet, un ensemble flou est un ensemble dont les frontières sont progressives, au contraire d'un ensemble classique, dont les frontières sont nettes. Un élément fait donc plus ou moins partie de chaque ensemble flou. Lorsque les données sont de dimension 1, un ensemble classique peut être représenté par un rectangle (appartenance = 1 à l'intérieur, 0 au-dehors). alors qu'un ensemble flou peut être un triangle, un trapèze, une gaussienne...

De même que précédemment, l'apprentissage consiste à modifier progressivement les valeurs des paramètres jusqu'à ce que les sorties du système expert flou correspondent aux sorties désirées.

Quatre types de paramètres sont calculés par apprentissage : la position et la largeur des ensembles flous des prémisses, les poids des règles et le degré d'activation de chaque classe pour chaque règle.

En phase d'utilisation opérationnelle, le système expert flou fournit, en plus de la classe attribuée à l'événement sismique, la liste des règles applicables par ordre décroissant de pertinence. Certaines de ces règles peuvent être en contradiction avec les autres, ce qui permet d'examiner les solutions alternatives, mais c'est l'agrégation du résultat de toutes les règles qui fournit le résultat global.

L'utilisateur a donc à sa disposition :

- la décision brute (séisme, explosion, coup de terrain) ;
- la liste des règles applicables ;
- la liste des règles apportant une contradiction à cette décision ;
- la raison de la décision de chaque règle (par examen de la cohérence entre les données et les ensembles flous correspondants).

Un exemple de règle de décision trouvée par le système est le suivant :

**si** (Heure **est** _milieu_de_ après-midi)
**et** _(Latitude **est** très_proche_de 43.5° N)_
**et** (Longitude **est** _très_proche_de_ 5.5° E)
**et** _(Magnitude **est** environ 2.7)_
**et** (Date **est** _de_préférence_ samedi)
**alors** (avec niveau de confiance = 0,8)
(séisme **est** improbable)
(explosion **est** probable)
(coup de terrain **est** improbable)

Dans. l'invention, pour des raisons de convergence difficile, on paramètre cette descente de gradient en introduisant des variables intermédiaires. Si l'on veut effectuer une descente de gradient sur un paramètre p avec p=$\phi$ (s), $\phi$ étant une fonction dérivable, strictement monotone, indépendante de p et des valeurs des exemples servant à l'apprentissage, on a les mêmes solutions finales en effectuant une descente de gradient sur s. L'avantage d'un tel changement de variable est qu'il devient possible de changer la façon d'atteindre la solution, et en particulier de faciliter la convergence dans les cas difficiles.

Dans l'invention, on optimise les paramètres suivants :

(1) La position y des ensembles flous des prémisses : lorsque la descente de gradient est appliquée directement sur ce paramètre, on obtient généralement une convergence difficile. Ceci s'explique par le fait que la variation de la position y des ensembles flous des prémisses n'est pas une fonction croissante de la distance à l'exemple.

On corrige ce phénomène en posant $x=y/\sigma$.

(2) La largeur $\sigma$ des ensembles flous des prémisses : lorsque les données sont structurées en groupes de tailles très différentes, l'algorithme ne peut pas converger. En étudiant la variation relative $\Delta\sigma/\sigma$, on découvre qu'elle n'est pas bornée (c'est-à-dire que rien ne l'empêche de tendre vers des valeurs infinies). Lorsque les données sont très groupées, cette variation prend effectivement des valeurs très élevées. Pour avoir une modification relative plus faible lorsque les données sont rapprochées, on pose $s=1n(2\sigma^2)$.

(3) Les poids p des règles : c'est le paramètre le plus difficile à régler. Avec une descente de gradient directe, les poids les plus faibles diminuent et deviennent négatifs, ce qui leur fait perdre toute signification et fait diverger l'algorithme. On choisit donc une fonction d'activation positive en imposant une contrainte supplémentaire : pour différents exemples avec le même niveau activation de la règle, la variation de ce niveau doit être la même si les conclusions sont égales. La conséquence est que la variation relative des poids des règles doit être constante lorsque les exemples ont le même degré d'appartenance aux ensembles flous. Ceci est réalisé en posant $r=ln(\rho)$.

(4) Le degré d'activation d de chaque classe pour chaque règle.

La descente de gradient est donc effectuée non pas sur y, $\sigma$ et $\rho$, mais sur :

- ■ $x=y/\sigma$
- ■ $s=ln(2\sigma^2)$
- ■ $r=ln(\rho)$

Pour d, on n'effectue pas de changement de variable. Ces changements de variables assurent une très bonne qualité de convergence et permettent l'obtention de systèmes-experts flous très efficaces.

### • *Base d'exemples et validation*

La base d'exemples utilisée doit vérifier deux principes fondamentaux :

- **-** être *qualitativement* représentative du problème réel (distribution des exemples conformes à la distribution réelle) ;
- **-** être *quantitativement* représentative du problème (nombre d'exemples suffisant pour constituer un échantillonnage satisfaisant).

Il existe plusieurs méthodologies d'apprentissage et de validation. Dans la procédure la plus simple, on divise la base d'exemples en deux bases disjointes : la base d'apprentissage et la base de test. On entraîne le système par apprentissage sur la première et on vérifie son bon fonctionnement sur la seconde. Une base d'exemples ne vérifiant pas conjointement les deux propriétés énoncées ci-dessus fait courir le risque de conduire à un système incapable de généraliser correctement, c'est-à-dire de fonctionner sur des exemples nouveaux, non présentés au cours de la phase d'apprentissage.

Que ce soit pour les réseaux de neurones artificiels, pour les systèmes-experts flous ou plus généralement pour tout système conçu par apprentissage statistique sur des données expérimentales, il est primordial d'utiliser une base d'exemples suffisante en qualité et en quantité, et de valider le système mis au point par des procédures rigoureuses.

Description détaillée

### • *Description* **d'un événement** *sismique*

Un événement sismique à identifier peut être décrit par :

- **-** la donnée des signaux en provenance du réseau de stations sismiques, ou
- **-** des propriétés de plus haut niveau, directement mesurables ou calculées par des modèles géophysiques. On peut utiliser par exemple la localisation de l'événement (latitude et longitude), sa magnitude et le moment où il est survenu (heure et jour de la semaine). Par exemple les informations de haut niveau sont les suivantes : le jeudi 7 avril 1966 à 12 heures, un séisme de magnitude 1,4 s'est produit par 02°35'06" de longitude est et 49°12'25" de latitude nord.

### • *Le classifieur neuro-flou*

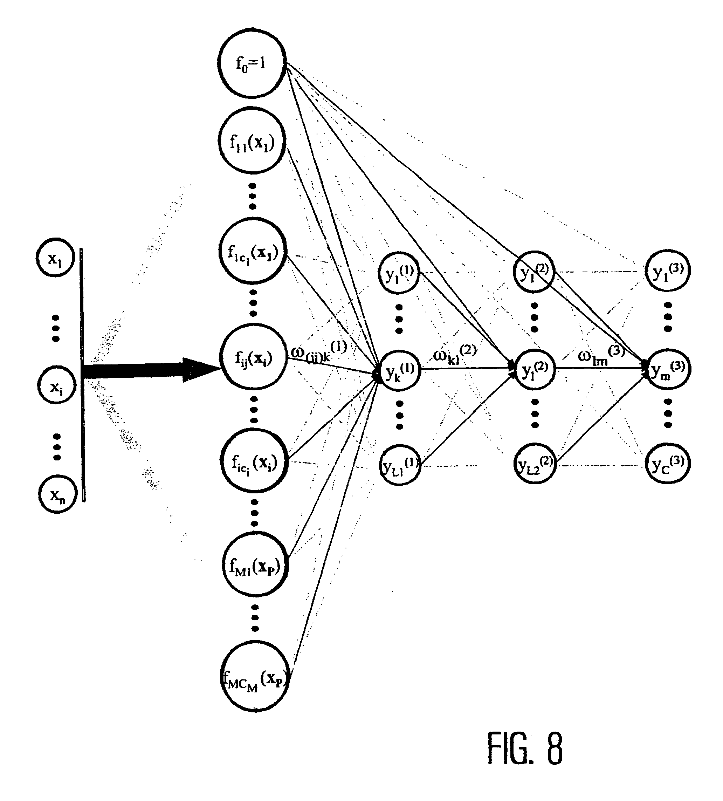

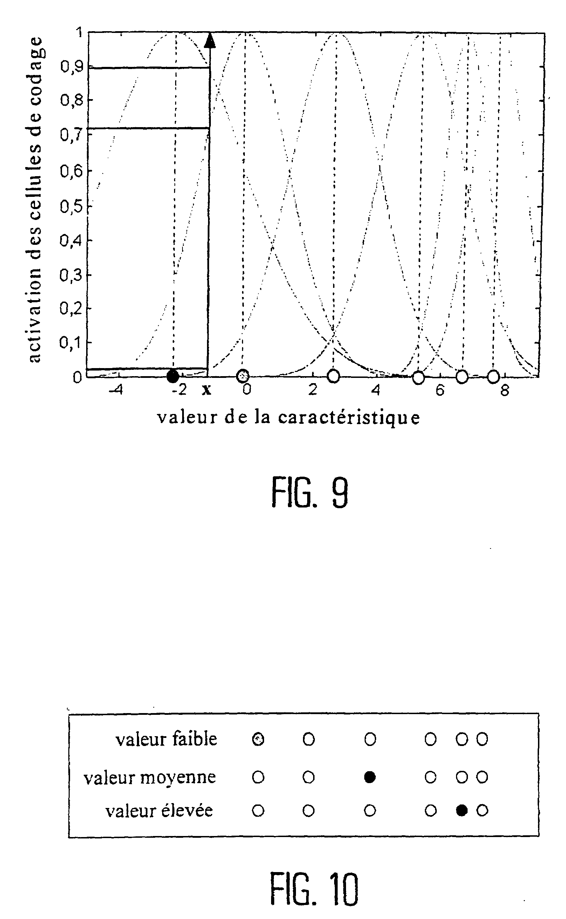

Le classifieur neuro-flou (expert CNF), comme illustré sur la figure 8, est constitué d'un codage neuro-flou des données suivi d'un perceptron multicouche. Il s'applique aux données de haut niveau.

Le codage neuro-flou consiste à associer plusieurs cellules de codage à chaque variable (ou groupe de variables) d'entrée, chaque cellule ayant une région d'influence modélisée par une fonction définissant son mécanisme d'activation. La présentation d'un vecteur de valeurs génère alors un schéma d'activation des cellules de codage associées.

La figure 9 illustre ce mécanisme d'activation des cellules de codage. La présentation d'une valeur génère un schéma d'activation correspondant à la réponse impulsionnelle de chaque fonction d'activation à la valeur présentée. Les niveaux de gris affectés aux centres des cellules indiquent leur niveau d'activation compris entre 0 et 1 (noir : 1, blanc : 0).

La figure 10 montre des exemples de schémas d'activation générés par la présentation de valeurs typiques. Il s'agit d'un codage de type curseur. La valeurs faibles (respectivement élevées) activent préférentiellement les cellules de gauche (respectivement droite).

L'intérêt de ce codage est multiple :

- par sa nature même, il permet de représenter des données incomplètes, imprécises ou incertaines et de les utiliser efficacement pour la prise de décision ;
- par ses propriétés de conditionnement non linéaire des données, il facilite les traitements ultérieurs (ici, la classification).

Ce codage neuro-flou est réalisé en plusieurs étapes successives : définition des sous-groupes de caractéristiques, choix et placement des cellules de codage affectées à chaque groupe, détermination des paramètres de la région d'influence de chaque cellule. Les détails de cette procédure sont exposés dans le document référencé [8].

Une fois les données codées, elles sont analysées par le perceptron multicouche qui en calcule la classe.

**• *Le système expert flou***

Dans un mode de réalisation le système de l'invention comporte une seule branche de traitement basée sur un tel système expert flou

Le système expert flou (expert SEF) s'applique également aux données de haut niveau.

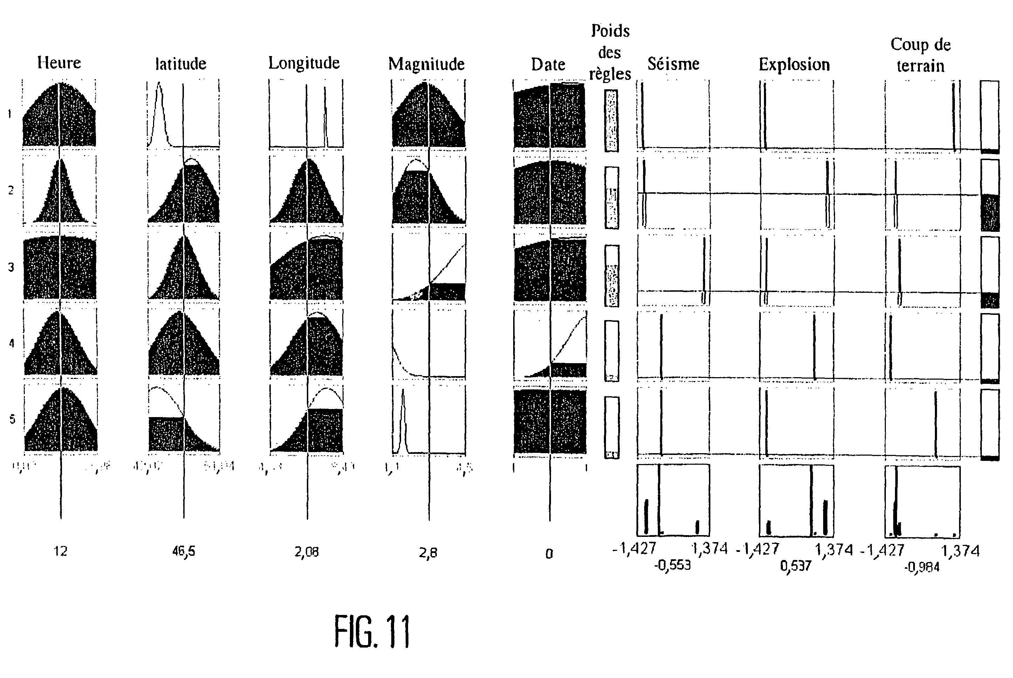

Dans la figure 11, on représente un système expert flou à cinq règles (une règle par ligne).

Pour chaque ligne, les cinq colonnes de gauche représentent les prémisses et correspondent à cinq entrées : l'heure, la latitude, la longitude, la magnitude et la date. Les prémisses sont composées d'ensembles flous en forme de gaussiennes qui recouvrent les domaines de la variable d'entrée conduisant à un renforcement de l'activité de la règle.

Quatre types de paramètres sont calculés par apprentissage : la position et la largeur des ensembles flous des prémisses (colonnes 1 à 5), les *poids* des règles (colonne 6), qui permet de spécifier le degré d'importance de chaque règle dans le processus de décision et le degré d'activation de chaque classe (séisme naturel, explosion ou coup de terrain) pour chaque règle (colonnes 7 à 9).

A chaque présentation d'un exemple à classifier, on calcule le contenu de la colonne 10 et de la colonne 6 :

■ La colonne 10 donne l'activation de chaque règle (et permet donc d'estimer son adéquation avec le cas traité).
■ La ligne 6 est la synthèse des décisions des cinq règles et donne la réponse globale du système expert flou (ici, la décision est « explosion »). cette synthèse est faite en calculant le barycentre des décisions de toutes les règles (colonnes 7 à 9) pondérées par le niveau d'activation correspondant (colonne 10). Sur la figure 11, la position du barycentre pour chaque classe est symbolisée par un trait vertical ligne 6, colonnes 7 à 9.

L'apprentissage est réalisé en deux temps :

- une première phase consiste à positionner les ensembles flous (centres et largeurs), par exemple au moyen d'un algorithme dit des C-moyennes floues, comme décrit dans le document référencé [9] ;
- une deuxième phase consiste à réaliser une descente de gradient sur les quatre types de paramètres.

**• *Le réseau neuronal à connexions locales et poids partagés***

Au contraire des deux branches précédentes, le réseau de neurones à connexion locale et poids partagés (expert TDNN) admet en entrée les signaux sismiques eux-mêmes et apprend à extraire par apprentissage non seulement la procédure de décision, mais aussi les paramètres discriminants qui vont servir de base à cette décision. Ce réseau neuronal est de type perceptron multicouche à connexions locales et poids partagés prenant en entrée les spectrogrammes prétraités des signaux sismiques, comme décrit dans le document référencé [10]. Ces spectrogrammes sont obtenus par l'application d'une transformée de Fourier à fenêtre glissante sur le signal.

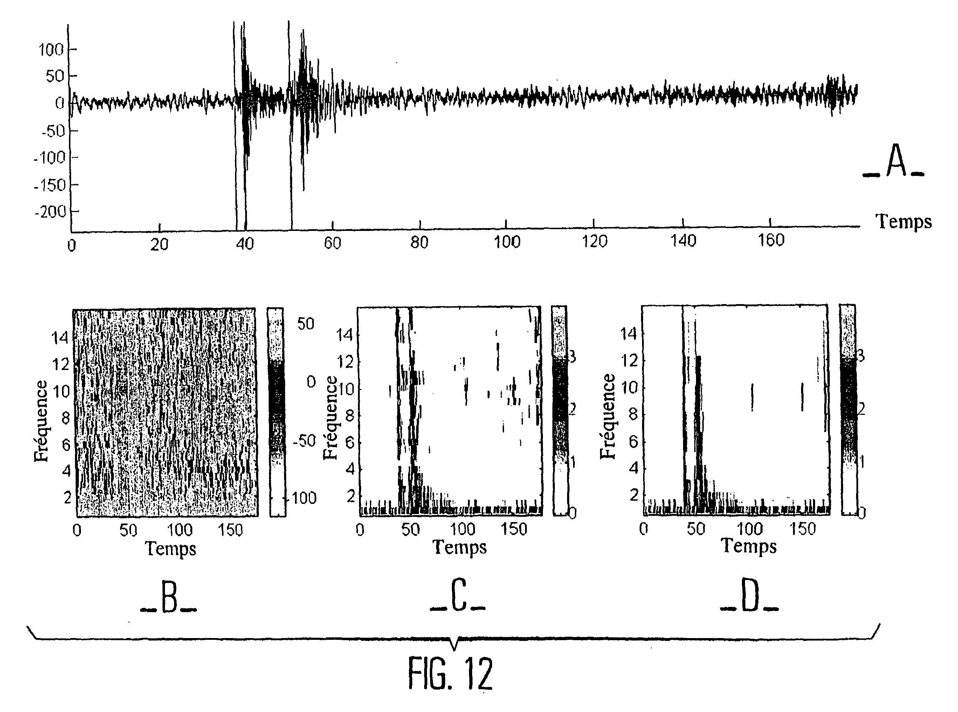

Les figures 12A à 12D illustrent les prétraitements successifs appliqués à chaque signal sismique aboutissant à un spectrogramme final à 15 bandes fréquentielles : la figure 12A illustre le signal initial ; la figure 12B illustre le spectrogramme déduit du signal avec 50 bandes fréquentielles ; la figure 12C illustre le spectrogramme « débruité » ; la figure 12D illustre le spectrogramme après réduction de 50 à 15 bandes fréquentielles.

Le spectrogramme obtenu est ensuite prétraité puis présenté en entrée d'un réseau de neurones de type TDNN. Chaque réseau est spécialisé dans le traitement des signaux enregistrés par une station donnée.

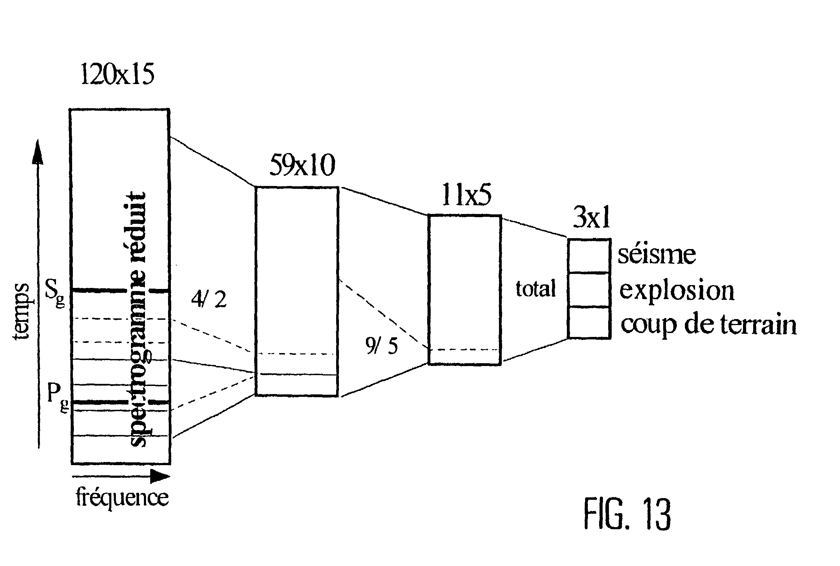

La figure 13 illustre l'architecture d'un réseau TDNN spécialisé dans la classification des spectrogrammes déduits des signaux enregistrés par un sismomètre donné, ce réseau comportant quatre couches de neurones. La couche d'entrée a des connexions locales et des poids partagés (4 trames avec un décalage de 2 trames) avec la première couche cachée. Celle-ci a de même des connexions locales à poids partagés (9 trames avec un décalage de 5 trames) avec la seconde couche cachée, totalement connectée à la dernière couche.

Les poids partagés rendent l'architecture plus robuste aux petits décalages des pointages des phases ou de trames manquantes ou erronées. Cependant, à cause de la vitesse de propagation des ondes P (compression) et S (cisaillement), la durée entre l'arrivée de la phase P et de la phase S varie en fonction de la distance entre la station d'enregistrement et l'épicentre de l'événement, ce qui complique l'apprentissage. La solution adoptée consiste à aligner le pointage de la phase $P$ sur la 10ème trame et celui de la phase $S$ sur la 60ème trame.

#### • *La prise de décision finale*

Pour la prise de décision finale, on suppose que toutes les sorties sont comprises dans l'intervalle réel[-1,1]. Cette prise de décision consiste en une association des réponses fournies par les trois branches afin d'augmenter la fiabilité. Elle peut être réalisée par un calcul de moyennes arithmétiques sur les sorties homologues de chacune des trois branches. Pour chacune des trois sorties Si du système global, on a alors :

$$S_i \underset{i=1\dots3}{} = \frac{1}{3} \sum_{j=1}^{3} S_{ij}$$

La certitude sur la réponse est évaluée par un coefficient calculable seulement si le système est en situation de prise de décision (c'est-à-dire s'il y a une et une seule sortie strictement positive). Ce coefficient est alors égal à la moyenne des valeurs absolues des sorties :

$$K = \frac{1}{3} \sum_{i=1}^{3} |S_i|$$

- ■ $K < 0.2$ : doute
- ■ $K \in ]0.2,0.4]$ : prudence
- ■ $K \in ]0.4,0.6]$ : certitude raisonnable
- ■ $K \in ]0.6,0.8]$ : grande certitude
- ■ $K > 0.8$ : certitude quasi absolue

Ainsi, on peut avoir par exemple :

| Système | Classe choisie | Détail des réponses par classe | Degré de certitude |
|---------|----------------|-------------------------------|--------------------|
| 1 | Classe 3 | (-0,9 -0,4 +0,8) | 0,7 : grande certitude |
| 2 | Indétermination 1 ou 3 | (+0,1-0.5 +0,3) | Incertitude complète |
| 3 | Classe 1 | (+0.2-0,6-0.2) | 0.3 : prudence |
| Fusion | Classe 3 | (-0,2 -0,5 +0,3) | 0,3 : prudence |

Exemple de mise en oeuvre de l'invention : discrimination d'événements sismiques régionaux

**• *Localisation de l'événement***

La discrimination « événement naturel /événement artificiel » est une étape majeure de la surveillance sismique, réalisée rapidement dès la lecture des signaux lors de la phase de dépouillement, puis affinée au cours de chaque nouveau traitement. On évalue à environ sept ans le temps nécessaire aux analystes pour être véritablement opérationnels. Ces analystes étant de véritables experts, il est difficile d'exprimer clairement leur méthode de raisonnement basée à la fois sur des connaissances expertes et sur un raisonnement par cas.

La localisation d'un événement sismique est obtenue après une succession d'aller-retours entre deux phases principales :

- le pointage des différentes phases sismiques effectué sur les signaux enregistrés par les stations ayant détecté l'événement et le calcul de la magnitude ;
- la localisation elle-même, réalisée à l'aide d'un modèle mathématique conçu par les sismologues.

A l'issue de la phase de pointage, la localisation de l'événement peut-être effectuée à l'aide d'un logiciel de simulation connu de l'homme de métier. Il fait appel à des modèles sismologiques contenant des informations sur la vitesse des ondes, les différents types d'ondes et leur mode de propagation, des corrections d'altitude selon les stations... Plusieurs hypothèses de localisation sont proposées, associées à un degré de cohérence des données. Si celles-ci ne conviennent pas à l'expert, il modifie ses pointés de phases puis relance une localisation. Ce cycle est réitéré jusqu'à l'obtention d'un résultat jugé satisfaisant.

La qualité de la localisation dépend du nombre et de la qualité des stations ayant servi à la localisation de l'événement, ainsi que de leur répartition azimutale. Les événements situés en France sont donc, en règle générale, mieux localisés que les événements étrangers. Pour affiner la localisation dans ce dernier cas, les experts accèdent régulièrement à des données étrangères. Avec les seules données françaises, la précision de localisation des événements survenant en France est en moyenne de cinq kilomètres. Elle est estimée à environ un kilomètre dans le meilleur des cas.

Le tableau II en fin de description donne un exemple de résultats fournis par la procédure de localisation. La partie supérieure résume les résultats obtenus : à chaque valeur d'heure origine, de magnitude et de localisation (latitude-longitude) est associée le niveau d'imprécision estimé. La partie inférieure indique les stations ayant servi à la localisation et les erreurs moyennes quadratiques (RMS) obtenues en fonction de l'hypothèse de profondeur de l'épicentre. Dans le cas des coups de terrain, la profondeur est arbitrairement fixée à un kilomètre.

**• *Caractérisation de l'événement***

On s'intéresse ici aux événements sismiques locaux et régionaux, c'est-à-dire survenus en France métropolitaine ou dans les régions limitrophes. Ces événements sont souvent qualifiés de *proches* par opposition aux téléséismes *lointaine* (épicentre situé à plusieurs milliers de kilomètres du capteur).

Trois types d'événements sismiques doivent être discriminés :

- les séismes, événements sismiques d'origine naturelle ;
- les explosions terrestres (tirs de mines, de carrières, de chantiers...) ou en mer (déminage, essais d'armes...) ;
- les coups de terrains correspondant à l'effondrement d'une couche minière et liés à l'exploitation de la mine.

L'analyse de l'état de l'art a montré l'échec des approches basées sur une discrimination à partir de signaux sismiques uniquement. On exploite donc l'ensemble des données disponibles en adoptant une approche basée sur la fusion multi-experts et multi-sources. La conception du système de discrimination automatique d'événements sismiques est basée sur trois modules :

- les deux premiers (experts CNF et SEF) sont des modules effectuant une discrimination à partir des seules données de haut niveau, déduites par le modèle inverse du laboratoire LDG. Aucun signal sismique n'est donc directement pris en compte à ce niveau ;
- le troisième (expert TDNN) est basé sur l'analyse des signaux sismiques.

• *Données utilisées*

Répartition géographique des événements

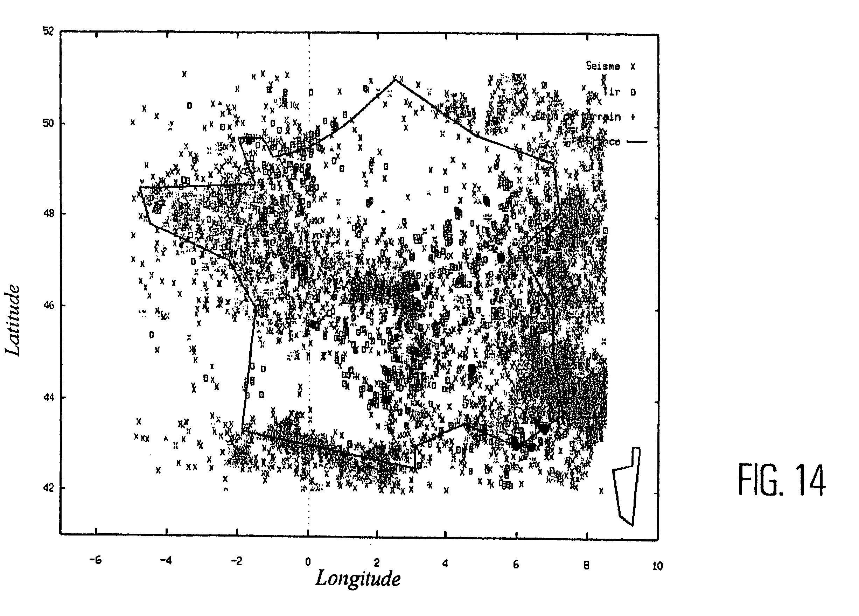

Les événements sismiques à analyser se répartissent sur l'ensemble du territoire français et dans un périmètre proche. Les épicentres des événements enregistrés par le laboratoire LDG de 1962 à 1996 sont illustrés sur la figure 14.

Données de haut niveau

Chaque événement sismique est caractérisé par les informations suivantes : la date et l'heure origine de l'événement, la latitude et la longitude de l'épicentre, et sa magnitude.

L'heure et la date sont retenues en raison des règles régissant les tirs de carrières ou de mines en France, interdisant les tirs nocturnes ou durant les week-ends et jours fériés. Néanmoins, des dérogations sont accordées à certains chantiers, par exemple pour éviter les nuisances à la circulation.

La magnitude est retenue car les coups de terrain ont une magnitude typique d'après les sismologues (environ 3). De plus, seuls les séismes peuvent fournir les plus fortes magnitudes. Plusieurs valeurs de magnitude sont prises en compte lorsqu'elles sont disponibles.

La localisation de l'épicentre, caractérisée par sa latitude et sa longitude, est également une caractéristique majeure. Il existe néanmoins certaines mines situées dans des régions à forte sismicité et susceptibles d'occasionner des coups de terrain.

Données de bas niveau

Les données de bas niveau sont les signaux en provenance des 42 stations sismiques du laboratoire LDG (voir la figure 1). Les prétraitements portent essentiellement sur la création des spectrogrammes des signaux sismiques, qui sont non stationnaires. Ces spectrogrammes sont obtenus par l'application d'une transformée de Fourier à fenêtre glissante sur le signal. Dans un premier temps, le signal, échantillonné à 50 Hz, est segmenté en trames de deux secondes décalées d'une seconde par une fenêtre de Hamming. On calcule ensuite la densité spectrale d'énergie sur 50 bandes fréquentielles avec élimination de la composante continue. Puis, on applique une transformation logarithmique avec soustraction de bruit, dont le modèle est supposé logarithmique, dans chaque bande selon l'équation $\max(\ln(1+x)-\mu(bruit)-\sigma(bruit),0)$, où $\mu(bruit)$ et $\sigma(bruit)$ correspondent à la moyenne et à l'écart-type du bruit estimés sur une période antérieure au pointage de l'onde P. Enfin, on réduit le nombre de bandes fréquentielles de 50 à 15 par une compression pseudo-logarithmique des hautes fréquences.

• *Résultats obtenus*

Le système décrit ci-dessus classifie les événements sismiques régionaux français avec les performances suivantes :

-    86 % pour les séismes ;
-    91 % pour les explosions ;
-    plus de 99% pour le coups de terrain.

Les performances globales sont d'environ 90%.

## TABLEAU  I

BULLETIN PROCHE DU  09 SEP 1998 AU  15 SEP 1998        P 1998-037

HEURE OR: heure origine (TU)
LAT: latitude de l'épicentre (deg)
LON: longitude de l'épicentre (deg)
PRO: profondeur de l'épicentre (Km)
ML: magnitude locale
RMS: résidu quadratique moyen (s)

SEISMES PROCHES - RESUME - NOMBRE D'EVENEMENTS : 34

| DATE | HEURE OR | LAT | LON | PRO | ML | RMS | REGION |
|---|---|---|---|---|---|---|---|
| 09 Sep | 4 19 55.8 | 44.15 N | 11.59 E | 2 | 2.9 | .8 | 44 km SE Bologne |
| 09 Sep | 11 27 59.3 | 39.73 N | 16.28 E | 2 | 5.0 | 1.4 | 162 km S Bari |
| 09 Sep | 11 33 35.6 | 44.43 N | 9.83 E | 2 | 3.0 | .7 | 71 km E Genes |
| 09 Sep ( PGF = 20H  50min) | | | | | | | |
| 10 Sep | 7 19 30.1 | 45.63 N | 11.18 E | 2 | 2.7 | 1.1 | 49 km S Trente |
| 10 Sep | 15 41 48.2 | 40.67 N | .16 W | 5 | 3.0 | 1.3 | 57 km W Vinaroz |
| 10 Sep | 18 13 40.7 | 43.07 N | .40 W | 2 | 2.1 | .3 | 22 km SE Oloron-Ste-Marie (64) |
| 10 Sep | 20 41 27.1 | 45.41 N | 6.66 E | 2 | 2.2 | .7 | 29 km NE Saint-Jean-de-Maurienne (73) |
| 11 Sep | 8 51 55.4 | 42.03 N | 9.53 E | 2 | 2.5 | .3 | 44 km SE Corte |
| 11 Sep | 11 28 48.9 | 44.69 N | 7.18 E | 2 | 2.2 | .3 | 44 km NW Cuneo |
| 12 Sep | 4 28 48.2 | 42.92 N | .20 E | 5 | 1.8 | .2 | 17 km S Bagneres-de-Bigorre (65) |
| 12 Sep | 5 30 20.9 | 45.40 N | 6.67 E | 2 | 1.7 | .2 | 29 km NE Saint-Jean-de-Maurienne (73) |
| 12 Sep | 8 47 31.6 | 44.61 N | 10.22 E | 2 | 2.7 | .6 | 90 km W Bologne |
| 12 Sep | 9 40 56.6 | 41.27 N | 1.40 E | 2 | 2.5 | 1 | 66 km W Barcelone |
| 12 Sep | 9 48 8.1 | 44.06 N | 12.72 E | 2 | 3.1 | .6 | 78 km NW Ancone |
| 12 Sep | 13 56 44.3 | 47.94 N | 2.55 W | 2 | 1.8 | .5 | 34 km SE Pontivy (56) |
| 12 Sep | 22 13 10.3 | 51.47 N | 6.88 E | 2 | 2.8 | .3 | 29 km N Dusseldorf |
| 13 Sep | 2 9 31.5 | 46.12 N | 7.94 E | 2 | 2.4 | .6 | 36 km SE Sierre |
| 13 Sep | 6 23 28.3 | 39.64 N | .75 W | 2 | 2.8 | .6 | 35 km NW Valence |
| 13 Sep | 15 41 37.2 | 43.05 N | .46 W | 2 | | .1 | 19 km SE Oloron-Ste-Marie (64) |
| 14 Sep | 3 33 33.0 | 44.28 N | 10.93 E | 2 | 3.4 | .7 | 41 km SW Bologne |
| 14 Sep | 5 24 49.7 | 38.20 N | 13.03 E | 2 | 4.0 | 1.3 | 32 km W Palerme |
| 14 Sep | 6 57 37.4 | 44.37 N | 10.62 E | 2 | 2.7 | 1.0 | 59 km W Bologne |
| 14 Sep | 9 7 36.6 | 48.10 N | 7.94 E | 14 | 3.0 | .3 | 13 km NE Freiburg-im-Brisgau |
| 14 Sep | 10 21 11.6 | 44.26 N | 10.89 E | 2 | 3.2 | .5 | 44 km SW Bologne |
| 14 Sep | 13 57 14.0 | 48.05 N | 3.54 W | 22 | | .1 | 36 km N Lorient (56) |
| 14 Sep ( PGF = 17H  5min) | | | | | | | |
| 14 Sep | 17 11 2.1 | 46.18 N | 6.79 E | 2 | 2.0 | .4 | 32 km SE Thonon-les-Bains (74) |
| 14 Sep | 19 35 8.1 | 43.65 N | 12.42 E | 2 | 2.8 | .4 | 59 km N Perouge |
| 14 Sep | 22 39 44.4 | 44.68 N | 7.60 E | 2 | 2.1 | .7 | 31 km N Cuneo |
| 15 Sep | 6 24 25.7 | 43.59 N | 7.69 E | 19 | 2.5 | .3 | 24 km S San Remo |
| 15 Sep | 15 48 1.8 | 43.47 N | .65 W | 2 | 2.7 | .4 | 30 km NW Pau (64) |
| 15 Sep (ETSF = 18H  5min) | | | | | | | |
| 15 Sep | 23 3 52.8 | 44.22 N | 10.77 E | 2 | 2.7 | .5 | 54 km SW Bologne |

TABLEAU II

100596      probul.dat      /data/sismic/exploit/dat/P19190.131.tou37:06 METDST 1
nombre de stations utilisees  11 -   Res dans bulletin: oui
preloc. lat: 43.2 lon:  5.4 ho: 19 19 53.1

```
------------------------------------------------------------------------------
|                                              |                               |
|         region: 11 km S  Aix-en-Provence (13)|   rms:  .289    nb d'iter: 3  |
|                                   ' c de toit '|                             |
|                                              |                               |
|      heure origine: 19 19 53.8  +/-  .3      |  ellipse a 95% de confiance:  |
|      latitude:          43.43 +/- 1.7        |     1/2 grand axe:   7.0 km.  |
|      longitude:          5.43 +/- 2.5        |     1/2 petit axe:   4.6 km.  |
|      profondeur:         1. km  imposee      |     azimut gd axe: 169.5 degres.|
|                                              |                               |
|      magnitudes:                             |                               |
|         ampl. 2.8 +/-9.9 sur  1 station      |                               |
|         duree 2.7 +/- .0 sur  2 stations     |                               |
|                                              |                               |
------------------------------------------------------------------------------
```

| code | ph | < heure > | dist | azi | ampl | per | duree | res | ml | md | pro 1. km res | 2. km res | 15. km res | 25. km res | 30. km res |
|------|-----|-----------|------|-----|------|-----|-------|-----|-----|-----|------|------|------|------|------|
| | | | | | | | | | | | lat 43.43 | 43.44 | 43.50 | 43.53 | 43.36 |
| | | | | | | | | | | | lon 5.43 | 5.44 | 5.51 | 5.59 | 5.34 |
| | | | | | | | | | | | rms .29 | .32 | .98 | 1.65 | 1.99 |
| | | | | | | | | | | | nit 3 | 3 | 5 | 9 | 8 |
| LRG | pg | 19 20 6.5 | 75 | 87 | | | | -.1 | | | -.1 | -.9 | -1.7 | -1.9 |
| FRF | pg | 19 20 10.4 | 99 | 81 | | | 50. | -.2 | 2.7 | | -.2 | -.8 | -1.3 | -1.0 |
| FRF | sg | 19 20 21.8 | 99 | 81 | | | | -.4 | | | -.4 | -.3 | -.3 | -1.5 |
| LMR | pg | 19 20 8.7 | 87 | 96 | | | 50. | .0 | 2.7 | | -.1 | -1.0 | -1.8 | -1.1 |
| LMR | sg | 19 20 18.8 | 87 | 96 | | | | -.2 | | | -.3 | -.8 | -1.2 | -1.7 |
| SBF | pg | 19 20 21.8 | 168 | 72 | 22.4 | .4 | | -.3 | 2.8 | | -.3 | -.7 | -1.0 | 1.8 |
| SBF | pn | 19 20 20.8 | 163 | 72 | | | | .5 | | | .6 | 1.4 | 2.1 | .9 |
| SBF | sg | 19 20 41.9 | 168 | 72 | | | | .3 | | | .3 | .8 | 1.1 | 3.5 |
| PGF | pn | 19 20 37.1 | 307 | 107 | | | | -.2 | | | -.2 | .1 | .6 | .7 |
| PGF | sn | 19 21 9.8 | 307 | 107 | | | | .4 | | | .5 | 2.0 | 3.7 | 2.6 |
| LRG | sg | 19 20 15.8 | 75 | 87 | | | | .3 | | | .3 | .1 | -.3 | -2.3 |

## REFERENCES

[1] D. R. Baumgardt et K.A. Ziegler, "Spectral évidence for source multiplicity in explosions: application to régional discrimination of earthquake and explosion" (Bulletin of Seismological Society of America, vol. 78, pp. 1773-1795, 1988).

[2] P. S. Dysart et J. J. Pulli, "Régional seismic event classification at the NORESS array: seismological measurement and the used of trained neural networks" (Bulletin of Seismological Society of America, vol. 80, pp 1910-1933, 1990).

[3] P. W. Pomeroy, W. J. Best et T. V. McEvilly, "Test ban treaty vérification with régional data: a review" (Bulletin of Seismological Society of America, vol. 72, n°6, pp S89-S129, 1982).

[4] M. Musil et A. Plesinger, "Discrimination between local microearthquakes and quarry blasts by multilayer perceptrons and Kohonen maps" (Bulletin of Seismological Society of America, vol. 86, n°4, pp. 1077-1090, 1996).

[5] S.R. Taylor, "Discrimination between nuclear explosions and earthquakes" (Energy and Earth Sciences, pp. 56-57, 1990).

[6] F. U. Dowla, S. R. Taylor et R. W. Anderson, "Seismic discrimination with artificial neural networks: preliminary results with régional spectral data" (Bulletin of Seismological Society of America, vol. 80, n°5, pp. 1346-1373, 1990).

[7] M.Nicolas, J.-P. Santoire et P.-Y. Delpech "Intraplate seismicity : new seismotectonic data in western europ" (Tectonophysics, N° 179, pp. 27-53, 1990).

[8] S. Muller, P. Garda, J.-D. Muller, Y. Cansi "Seismic events discrimination by neuro-fuzzy merging of signal and catalogue features" (Physics Chemistry of The Earth (A), vol. 24, N° 3, pp. 201-206, 1999).

[9] B. T. W. Cheng, D. B. Goldgof, L. O. Hall, "Fast fuzzy clustering" (Fuzzy Sets and Systems 93, 49-56, 1998).

[10] A. Klaassen, X. Driancourt, S. Muller, J.-D. Muller, "Classifying régional seismic signals using TDNN-alike neural networks" (International Conference On Artificial Neural Networks' 98, Skövde, Suède, 2-4 septembre 1998).

[11] Chu et al: "First break refraction event picking using fuzzy logic systems" (IEEE Transactions on Fuzzy Systems, US, IEEE Inc. New York, vol. 2, N° 4, 1 novembre 1994, pages 255-266).

[12] EP-A- 0 468 229.

[13] J.D. Muller, Y. Cansi et S. Muller "RAMSES, un système multi-experts pour la surveillance sismique opérationnelle" (ISAI'99, juin 1999)

## Revendications

1. Système d'intelligence artificielle de classification d'événements, d'objets ou de situations à partir de signaux et de paramètres discriminants issus de modèles, comportant au moins une branche de traitement comprenant un système expert flou (SEF) prenant une décision à partir de propriétés de haut niveau et de paramètres discriminants de plus bas niveau extraits des signaux par des procédures de type traitement de signal, et capable d'expliquer sa décision à l'utilisateur par l'intermédiaire de règles, **caractérisé en ce que** ces règles sont triées par ordre d'applicabilité, un tel tri étant rendu possible par la fourniture par le système expert flou d'un critère d'activation de chaque règle permettant d'estimer son adéquation avec le cas traité.

2. Système selon la revendication 1, dans lequel, dans le système expert flou (SEF) on effectue une descente de gradient sur les paramètres :

   ■ $x = y/\sigma$
   ■ $s = \ln(2\sigma^2)$
   ■ $r = \ln(\rho)$
   ■ $d$

   avec :

   ■ $y$ : : position des ensembles flous des prémisses
   ■ $\sigma$ : largeur des ensembles flous des prémisses
   ■ $\rho$ : poids des règles
   ■ $d$ : degré d'activation de chaque classe pour chaque règle

3. Système selon la revendication 1, qui est un système multi-experts constitué d'au moins deux branches de traitement indépendantes, se configurant automatiquement par apprentissage statistique sur des bases de données, ayant des propriétés particulières et. fusionnées par un système décisionnel de haut niveau.

4. Système selon la revendication 3, dans lequel une branche comprend un classifieur neuro-flou (CNF) prenant ses décisions à partir de propriétés de haut niveau et de paramètres discriminants de plus bas niveau extraits des signaux par des procédures de type traitement de signal.

5. Système selon l'une quelconque des revendications 3 ou 4, dans lequel une branche comprend un réseau neuronal à connexions locales et poids partagés (TDNN) constitués de bancs de filtres adaptatifs non linéaires, extrayant lui-même des informations discriminantes de représentation temps-fréquence des signaux correspondants.

6. Système selon l'une quelconque des revendications précédentes, qui est un système de classification d'événements géophysiques.

7. Système selon la revendication 6, dans lequel les propriétés de haut niveau sont la localisation, la magnitude, l'heure et la date.

**Patentansprüche**

1. Künstliches Intelligenzsystem für die Klassifizierung von Ereignissen, Objekten oder Situationen aufgrund von Signalen und diskriminierenden Parametern, von Modellen stammend, das wenigstens einen Verarbeitungszweig mit einem unscharfen Expertensystem (SEF) umfasst, das eine Entscheidung trifft aufgrund von Eigenschaften hohen Niveaus und diskriminierenden Parametern niedrigeren Niveaus, Signalen entnommen durch Verfahren des Typs Signalverarbeitung, und das fähig ist, seine Entscheidung dem Benutzer mittels Regeln zu erklären, **dadurch gekennzeichnet, dass** diese Regeln nach der Reihenfolge ihrer Anwendbarkeit sortiert werden, wobei ein solches Sortieren möglich gemacht wird durch ein Aktivierungskriterium jeder Regel, geliefert durch das unscharfe Expertensystem, das ermöglicht, ihre Adäquatheit mit dem verarbeiteten Fall zu bewerten.

2. System nach Anspruch 1, bei dem man in dem unscharfen Expertensystem (SEF) eine Gradientenreduzierung bei folgenden Parametem durchführt:

- $x = y/\sigma$
- $s = \ln(2\sigma^2)$
- $r = \ln(\rho)$
- $d$

mit:

- $y$ : Position der unscharfen Komplexe der Prämissen
- $\sigma$ : Breite der unscharfen Komplexe der Prämissen
- $\rho$ : Gewichtung der Regeln
- $d$ : Aktivierungsgrad jeder Klasse für jede Regel.

3. System nach Anspruch 1, das ein Multiexpertensystem ist, gebildet durch wenigstens zwei unabhängige Verarbeitungszweige, die sich durch statistisches Lernen an Datenbanken automatisch konfigurieren, besondere Eigenschaften haben und durch ein Entscheidungssystem hohen Niveaus zusammengeschlossen sind.

4. System nach Anspruch 3, bei dem ein Zweig einen neuro-unscharfen Klassifizierer (CNF) umfasst, der seine Entscheidungen trifft aufgrund von Eigenschaften hohen Niveaus und diskriminierenden Parametern niedrigeren Niveaus, Signalen entnommen durch Verfahren des Typs Signalverarbeitung.

5. System nach einem der Ansprüche 3 oder 4, bei dem ein Zweig ein neuronales Netzwerk mit lokalen Verbindungen und geteilten Gewichtungen (TDNN) umfasst, gebildet durch Bänke bzw. Reihen nichtlinearer adaptiver Filter, das selbst den entsprechenden Signalen diskriminierende Zeit-Frequenz-Darstellungsinformationen entnimmt.

**6.** System nach einem der vorangehenden Ansprüche, das ein System zur Klassifizierung geophysikalischer Ereignisse ist.

**7.** System nach Anspruch 6, bei dem die Eigenschaften hohen Niveaus die Lokalisation, die Magnitude bzw. Größe, die Zeit und das Datum sind.

**Claims**

**1.** System of artificial intelligence for classification of events, objects or situations from signals and from discriminant parameters produced by models, having at least one processing branch comprising a fuzzy expert system taking a decision according to high level properties and discriminant parameters of lower level extracted from signals by signal processing type procedures, and capable of explaining its decision to the user through the intermediary of rules selected by order of applicability, **characterized in that** these rules are graded by order of applicability, such a grading being made possible by the supply by the fuzzy expert system of an activation criterion for each rule making it possible to estimate its adequation with the case in question.

**2.** System according to claim 1 in which, in the fuzzy expert system, a gradient decrease is carried out on the parameters:

- $x = y/\sigma$
- $s = 1n/2\sigma^2$
- $r = 1n\ (\rho)$
- $d$

with:

- $y$: position of fuzzy sets of premises
- $\sigma$: width of fuzzy sets of premises
- $\rho$: weights of rules
- $d$: degree of activation of each class for each rule.

**3.** System according to claim 1, which is a multi-expert system constituted of at least two independent processing branches, organizing themselves automatically through statistical learning on data bases, having particular properties and merged by a high level decisional system.

**4.** System according to claim 3, in which one branch corresponds to a neuro-fuzzy classifier taking its decisions based on high level properties and lower level discriminant parameters extracted from signals by signal processing type procedures.

**5.** System according to either of the claims 3 or 4, in which one branch comprises a neural network with local connections and shared weights constituted of banks of non-linear adaptable filters, itself extracting discriminant information for time-frequency representation of the corresponding signals.

**6.** System according to any one of the preceding claims, which is a system for classification of geophysical events.

**7.** System according to claim 6, in which the high level properties are the localization, the magnitude, the time and the date.

Réseau Sismique France

• Station CP    ◎ Station CP + LP

FIG. 1

FIG. 2

SBF

PGF

FRF

LMR

LRG

$t$ (sec.)

0    10    20    30    40    50    60

EP 1 192 596 B1

FIG. 3

BANDE Ku
EUTELSAT IIF2

BANDE C
INTELSAT 602

ASIE

AFRIQUE

EUROPE

GPS VSat

STATION SISMIQUE

CENTRE TELECOM

BRUYERES-LE-CHATEL
CENTRE NATIONAL DE DONNEES

EP 1 192 596 B1

EP 1 192 596 B1

```
                     ┌─────────────────────┐
                     │ décision globale par│
                     │ fusion multi-experts│
                     └─────────────────────┘
                                ▲
   ┌──────────────────┐         │         ┌──────────────────┐
   │       CNF        │─────────┼─────────│       SEF        │
   └──────────────────┘         │         └──────────────────┘
         ▲                      │                ▲
┌────────────┐ ┌──────────────┐ │ ┌────────────┐ ┌──────────────┐
│ données de │ │ discriminants│ │ │ données de │ │ discriminants│
│ haut niveau│ │extraits des  │ │ │ haut niveau│ │extraits des  │
│            │ │   signaux    │ │ │            │ │   signaux    │
└────────────┘ └──────────────┘ │ └────────────┘ └──────────────┘
                                │
                     ┌─────────────────────┐
                     │        TDNN         │
                     └─────────────────────┘
                                ▲
              ┌────────────┐ │ ┌──────────────────┐
              │ pointés des│ │ │représentations   │
              │ phases P et S│ │ │temps-fréquence   │
              │            │ │ │des signaux       │
              └────────────┘ └──────────────────┘
```

# FIG. 4

Définition de la structure du système

Initialisation des paramètres internes du système

Présentation d'un exemple de la base

Calcul de la sortie (décision)

Correction des paramètres internes du système

Calcul de l'erreur par rapport à la sortie désirée

Convergence atteinte ?

non

oui

Fin de l'apprentissage

FIG. 5

$x_1$

$w_{11}$

$x_2$    $w_{21}$

$\Sigma$   $\phi$   $y_1$

$w_{31}$

$x_3$

FIG. 6

FIG. 7

EP 1 192 596 B1

FIG. 8

FIG. 9

FIG. 10

FIG. 11

FIG. 12

EP 1 192 596 B1

séisme
explosion
coup de terrain

3x1

total

11x5

9/ 5

59x10

4/ 2

120x15

spectrogramme réduit

Sg

Pg

fréquence

temps

FIG. 13

FIG. 14